# EUROPÄISCHE PATENTANMELDUNG

(11) **EP 0 982 222 A2**
(43) Veröffentlichungstag der Anmeldung: **01.03.2000**
(21) Anmeldenummer: 99116459.1
(22) Anmeldetag: 21.08.1999
(51) Int. Cl.: B62D 35/00, B60K 11/08, B60J 10/00

(54) **Schwenkbare flexible Profilleiste**

(30) Priorität: 24.08.1998 DE 19838190
(71) Anmelder: ContiTech Profile GmbH, 30165 Hannover (DE)
(72) Erfinder: Michael, Bethge, 30900 Wedemark (DE); Martin, Anders Dr., 31174 Schellerten (DE)

(57) **Zusammenfassung**

Es wird eine flexible Profilleiste (1) vorgeschlagen, deren Leistenkörper (1.0) um einen parallel zu ihm verlaufenden, mit ihm verbundenen Achsstab (2.1) auch dann schwenkbar ist, wenn der Achsstab (2.1) in mit dem Krümmungsradius (R) gebogener Form gelagert ist. Dies wird dadurch ermöglicht, daß der Leistenkörper (1.0) aus einem in Längsrichtung (L) elastisch dehnbaren und/oder stauchbaren Werkstoff gebildet ist.

## Beschreibung

Die Erfindung betrifft eine schwenkbare flexible Profilleiste gemäß dem Oberbegriff des Patentanspruchs 1.

Solche Profilleisten sind insbesondere aus dem DE-GM 88 06 085 bekannt. Aufgrund ihrer Flexibilität können sie auch in leicht gekrümmter Form montiert und betätigt werden; und sie haben sich in verschiedenen Anwendungen bewährt. Sie benötigen jedoch zur Erzeugung der Schwenkkräfte immer einen Druckluftanschluß und sind daher nicht einsetzbar, wo ein solcher nicht zur Verfügung steht.

Es stellte sich daher die Aufgabe, schwenkbare flexible Profilleisten zu realisieren, bei denen die Schwenkbewegung mit herkömmlichen mechanischen, insbesondere elektromotorischen oder elektromagnetischen Antriebseinrichtungen erzeugbar ist.

Diese Aufgabe wird erfindungsgemäß mit einer Profilleiste der eingangs genannten Art dadurch gelöst, daß diese gemäß dem kennzeichnenden Teil des Patentanspruchs 1 ausgebildet ist. In den Unteransprüchen sind bevorzugte Ausführungsformen und Ausgestaltungen sowie vorteilhafte Verwendungsmöglichkeiten der Erfindung angegeben.

Während bekannte Profilleisten, deren Leistenkörper in Längsrichtung weder stauchnoch dehnbar war, nur um völlig geradlinig verlaufende Achsen schwenkbar waren, sieht die vorliegende Erfindung als Schwenkachse jeweils einen biegsamen Achsstab vor, der eine gekrümmte Anordnung der Profilleiste ermöglicht, und dadurch, daß der Leistenkörper in Längsrichtung elastisch dehnbar und/oder stauchbar ausgeführt ist, kann seine Länge beim Schwenken in eine Stellung außerhalb des Krümmungsradius in der erfoderlichen Weise partiell - d.h. radiusabhängig - vergrößert und beim Schwenken in eine Stellung innerhalb des Krümmungsradius entsprechend partiell verringert werden. Das heißt, der Leistenkörper läßt sich aus einer vorgegebenen Grundstellung in eine gewünschte geschwenkte Position und zurück bewegen, ohne Falten zu bilden oder sich zu verwerfen, also ohne seine Querschnittskontur insgesamt wesentlich zu verändern.

In einer vorteilhaften Ausführungsform, die sich insbesondere für Leistenkörper eignet, die in dem innerhalb des Krümmungsradius der Schwenkachse liegenden Bereich schwenkbar sein sollen, weist der den Leistenkörper bildende Werkstoff eine zellige Struktur auf, und der Leistenkörper ist aus leicht komprimierbarem oder auch leicht dehnbarem Moosgummi gebildet.

Für Schwenkbewegungen nach außerhalb des Krümmungsradius der gekrümmten Schwenkachse ist der Leistenkörper in seiner Längsrichtung mit hoher elastischer Dehnbarkeit auszuführen.

Neben der Möglichkeit, den Achsstab aus elastisch biegsamem Metall zu bilden, kann es vorteilhaft sein, ihn aus einem entsprechenden, hart eingestellten Polymer zu formen, insbesondere ein extrudierbares Polymer zu verwenden, das sich mit dem Werkstoff des Leistenkörpers koextrudieren läßt.

Um die beabsichtigten Schwenkbewegungen des Leistenkörpers über den Achsstab auf den Leistenkörper übertragen zu können, ist der Achsstab unverdrehbar, insbesondere kraft- und/oder formschlüssig, im Leistenkörper fixiert. Vorteilhaft besitzt der Achsstab einen nicht runden Querschnitt; in einer bevorzugten Ausführungsform weist der Querschnitt radiale Vorsprünge auf, und insbesondere ist er sternförmig ausgebildet.

Die Länge des Achsstabes wird zweckmäßig so bemessen, daß er mindestens die eine Stirnfläche des Leistenkörpers überragt. Das überragende Ende läßt sich problemlos drehbar lagern, und vorzugsweise ist es mit einem Drehelement zur Momentübertragung nach Art einer Kurbel, eines Hebels, Zahnrades, Reibrades oder dergleichen verbunden, um den Achsstab in Drehung zu versetzen und damit den Leistenkörper zu verschwenken.

Eine andere vorteilhafte Möglichkeit, eine Kraft zur Erzeugung des die beabsichtigte Schwenkbewegung bewirkenden Drehmoments auf den um einen gebogenen Achsstab schwenkbaren Leistenkörper zu übertragen, besteht darin, an dem Leistenkörper selbst einen geeigneten Angriffspunkt, wie z.B. einen Lagerzapfen, eine Öse oder dergleichen zum Anlenken eines beispielsweise elektromotorisch oder elektromagnetisch betätigbaren Schwenkhebels, Stößels o.ä. vorzusehen.

Wo sich der Achsstab nicht über die Stirnfläche des Leistenkörpers erstreckt, kann er an dem betreffenden Ende drehbar/schwenkbar gelagert werden, indem man das Stabende mit einer konzentrischen Ausnehmung versieht, in die ein Lagerzapfen eingreifen kann. Dies läßt sich besonders einfach realisieren, indem man den Achsstab insgesamt rohrförmig, also mit einer durchgängigen konzentrischen Ausnehmung, ausbildet.

Besonders vorteilhaft können erfindungsgemäße Profilleisten zum Verengen und/oder Verschließen von gekrümmten schlitzförmigen Öffnungnen verwendet werden. Insbesondere lassen sich mit ihnen Einbauprobleme unter beengten Raumverhältnissen lösen, wenn z.B. die Lamellen einer Kühlerjalousie schwenkbar sein müssen, aber für Jalousien mit geraden Schwenkachsen der erforderliche Einbauraum nicht zur Verfügung steht.

Eine andere vorteilhafte Einsatzmöglichkeit besteht in der Verwendung als schwenkbare Strömungsleitflächen, wie beispielsweise Spoiler an Fahrzeugkarosserien. Ferner lassen sich erfindungsgemäße Profilleisten zweckmäßig als universell einsetzbare Hebel- oder Andrückeinrichtungen verwenden, mit denen z.B. die Seitenscheiben von Kraftfahrzeugen im teilgeöffneten Zustand in ihrer Führungsnut fixiert und bei schneller Fahrt an Flatterbewegungen gehindert werden.

Die beigefügte Zeichnung erläutert die Erfindung anhand schematisch wiedergegebener Ausführungsbeispiele und Detaildarstellungen.

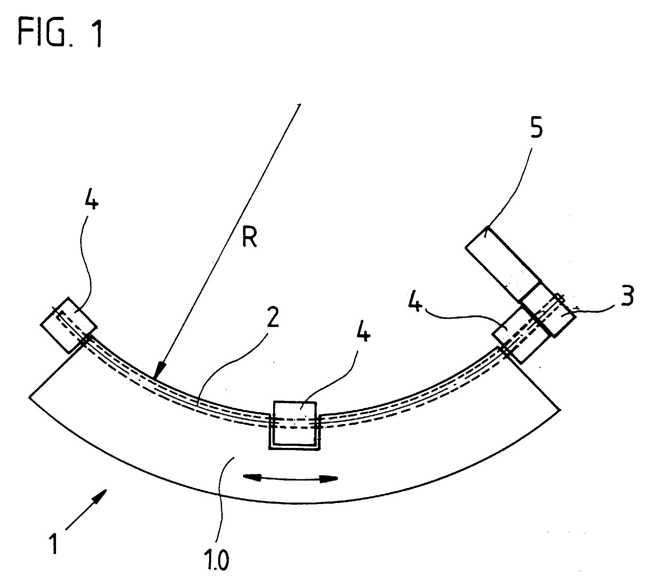

Fig. 1 zeigt eine erfindungsgemäße Profilleiste 1, in deren Leistenkörper 1.0 in Längsrichtung L ein biegsamer Achsstab 2 eingefügt ist. Durch die Lagerungen 4 ist der Achsstab in gekrümmter Form verdrehbar gehalten, und zwar so, daß der Leistenkörper 1.0 außerhalb des Krümmungsradius R etwa in der Zeichenebene verläuft. Über ein mit dem einen Ende des Achsstabes 2 verbundenes Drehelement 3 kann eine Antriebseinrichtung 5 ein Drehmoment auf den Achsstab 2 übertragen, durch das der Leistenkörper 1.0 verschwenkt wird, beispielsweise in eine zur Zeichenebene senkrechte Positon.

Da diese Schwenkbewegung für die außerhalb des Krümmungsradius R des Achsstabes 2 liegenden Bereiche des Leistenkörpers 1.0 mit einer Verringerung ihrer Abmessung in Längsrichtung L verbunden ist, ist der Leistenkörper 1.0 erfindungsgemäß in der Längsrichtung L stauchbar. Oder er ist elastisch dehnbar; dann gibt Fig. 1 den Leistungskörper 1.0 in gedehntem Zustand wieder. Anstelle dieser Alternativen kann der Leistenkörper auch sowohl dehnbar als auch stauchbar sein; wichtig ist, daß bei den durch das Verschwenken verursachten Längenänderungen die Querschnittskontur des Leistenkörpers 1.0 annähernd unverändert bleibt.

Durch eine Schar übereinander parallel angeordneter, gemäß Fig. 1 gekrümmt gelagerter erfindungsgemäßer Profilleisten kann beispielsweise eine gekrümmte Kühlerjalousie für Kraftfahrzeuge realisiert werden.

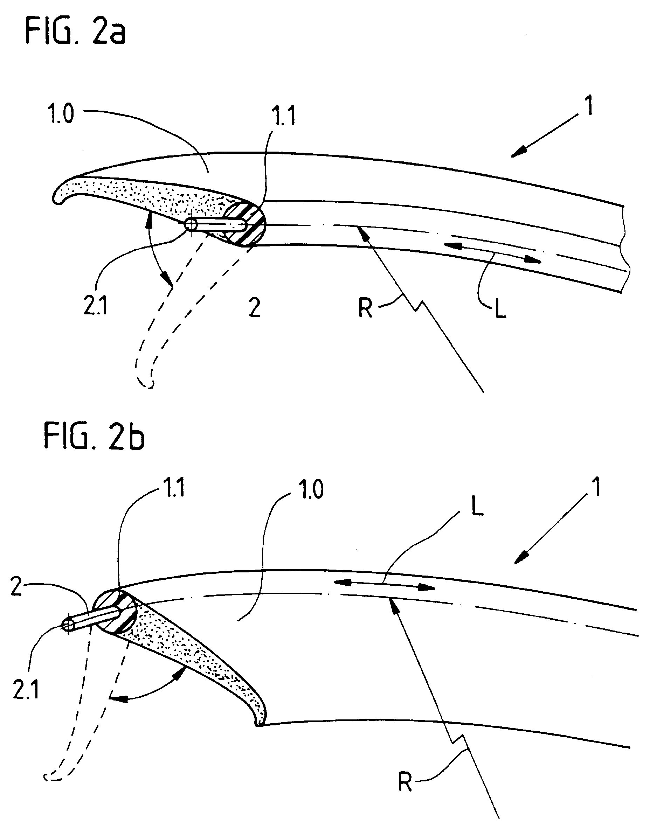

Die Fig. 2a und 2b verdeutlichen die Gegebenheiten bei den besagten Schwenkvorgängen, und zwar ist jeweils eine erfindungsgemäße Profilleiste 1 dargestellt, bei der ein Ende 2.1 des Achsstabes 2 die Stirnfläche 1.1 des Leistenkörpers 1.0 überragt und deren Leistenkörper 1.0 aus einer gestrichelt eingezeichneten Grundstellung in Fig. 2a in eine Stellung außerhalb des Krümmungsradius R des Achsstabes 2 und in Fig. 2b in eine Stellung innerhalb des Krümmungsradius R des Achsstabes 2 geschwenkt ist. Entsprechend ist der Leistenkörper 1.0 erfindungsgemäß in Fig. 2a in Längsrichtung L dehnbar, und in Fig. 2b stauchbar ausgeführt. Der Leistenkörper kann zu diesem Zweck aus zwei Werkstoffausführungen koextrudiert sein, und zwar um den Achsstab 2 herum aus einem kompakten Material und im übrigen aus einem leicht dehnbaren bzw. stauchbaren Werkstoff.

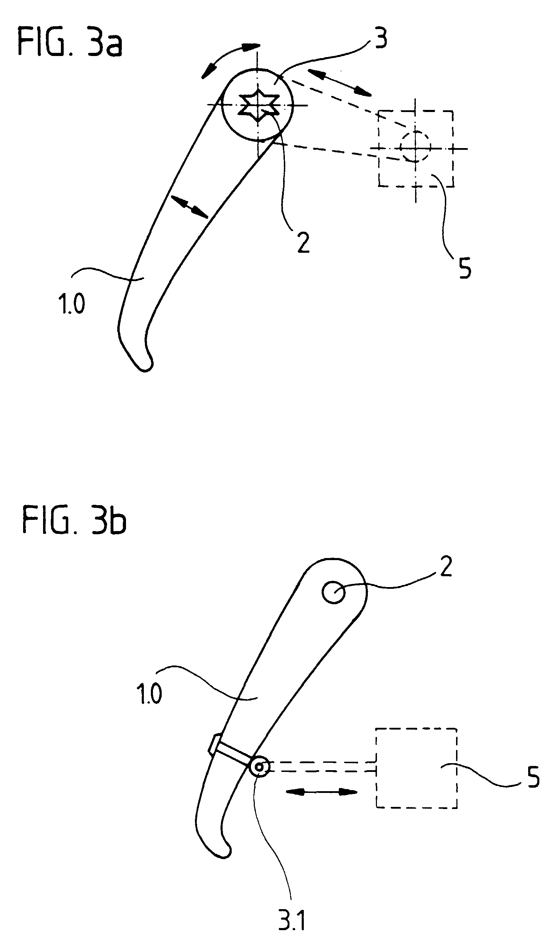

Die Fig. 3a und 3b geben konstruktive Möglichkeiten zur Einleitung der Kräfte wieder, die die Schwenkbewegungen der erfindungsgemäßen Profilleisten bewirken. Gemäß Fig. 3a ist ein formschlüssig auf dem einen nicht runden Querschnitt aufweisenden Achsstab 2 fixiertes Drehelement 3 vorgesehen, auf das ein Antrieb 5 ein Drehmoment überträgt. Gemäß Fig. 3b greift ein Antrieb über eine Anlenkung 3.1 direkt am Leistenkörper 1.0 an und bewirkt, daß dieser um den Achsstab 2 geschwenkt wird.

## Patentansprüche

1. Flexible Profilleiste (1), die einen aus elastischen polymeren Werkstoffen geformten und um eine in seiner Längsrichtung (L) verlaufende Schwenkachse schwenkbaren Leistenkörper (1.0) aufweist,
**dadurch gekennzeichnet,**
daß als Schwenkachse ein biegsamer, nicht tordierbarer Achsstab (2) in den polymeren Leistenkörper (1.0) eingefügt ist und daß der Leistenkörper (1.0) aus einem in der Längsrichtung (L) elastisch dehnbaren und/oder elastisch stauchbaren Werkstoff gebildet ist.

2. Profilleiste nach Anspruch 1, dadurch gekennzeichnet, daß der Leistenkörper (1.0) im wesentlichen aus einem elastisch verformbaren Werkstoff gebildet ist, der eine zellige Struktur nach Art von Moosgummi aufweist.

3. Profilleiste nach Anspruch 1 oder 2, dadurch gekennzeichnet, daß der Achsstab (2) aus einem Hart-Polymer gebildet ist.

4. Profilleiste nach Anspruch 3, dadurch gekennzeichnet, daß der Achsstab (2) durch Koextrusion mit dem Leistenkörper (1.0) gebildet ist.

5. Profilleiste nach einem der Ansprüche 1 bis 4, dadurch gekennzeichnet, daß der Achsstab (2) unverdrehbar in dem Leistenkörper (1.0) fixiert ist.

6. Profilleiste nach einem der Ansprüche 1 bis 5, dadurch gekennzeichnet, daß der Achsstab (2) einen nicht kreisförmigen Querschnitt aufweist.

7. Profilleiste nach Anspruch 6, dadurch gekennnzeichnet, daß der Querschnitt des Achsstabes (2) radiale Vorsprünge (2.2) aufweist, insbesondere sternförmig ausgebildet ist.

8. Profilleiste nach einem der Ansprüche 1 bis 7, dadurch gekennzeichnet, daß wenigstens ein Ende (2.1) des Achsstabes (2) die entsprechende Stirnfläche (1.1) des Leistenkörpers (1.0) axial überragt.

9. Profilleiste nach einem der Ansprüche 1 bis 8, dadurch gekennzeichnet, daß sich der Leistenkörper (1.0) im wesentlichen an nur einer Längsseite des Achsstabes (2) radial erstreckt.

10. Profilleiste nach einem der Ansprüche 1 bis 9, dadurch gekennzeichnet, daß mindestens ein Ende (2.1) des Achsstabes (2) mit einem Drehelement (3) zur Momentübertragung nach Art einer Kurbel, eines Hebels, Zahnrades, Reibrades oder dergleichen verbunden ist.

11. Profilleiste nach einem der Ansprüche 1 bis 9, dadurch gekennzeichnet, daß am Leistenkörper(1.0) mindestens ein Angriffspunkt (3.1), wie z.B. ein Zapfen, eine Ausnehmung oder eine Öse, zum Anlenken eines Schwenkhebels o.ä. vorgesehen ist.

12. Verwendung von Profilleisten nach einem der Ansprüche 1 bis 11 zum Verengen und/oder Verschließen gekrümmter schlitzförmiger Öffnungen.

13. Verwendung von Profilleisten nach einem der Ansprüche 1 bis 11 als um gekrümmte Achsen schwenkbare Lamellen einer Jalousie.

14. Verwendung von Profilleisten nach einem der Ansprüche 1 bis 11 als um gekrümmte Achsen schwenkbare Strömungsleitflächen, insbesondere als Spoiler an Fahrzeugen.

15. Verwendung von Profilleisten nach einem der Ansprüche 1 bis 11 als um gekrümmte Achsen schwenkbare flächige Hebel- oder Andrückeinrichtungen.
